(19) Europäisches Patentamt
European Patent Office
Office européen des brevets

(11) **EP 1 709 635 B1**

(12) **EUROPEAN PATENT SPECIFICATION**

(45) Date of publication and mention
of the grant of the patent:
**05.11.2008 Bulletin 2008/45**

(51) Int Cl.:
***G11B 7/135*** (2006.01)

(21) Application number: **05702275.8**

(22) Date of filing: **11.01.2005**

(86) International application number:
**PCT/IB2005/000113**

(87) International publication number:
**WO 2005/078712 (25.08.2005 Gazette 2005/34)**

(54) **OBJECTIVE LENS**

OBJEKTIVLINSE

LENTILLE DE FOCALISATION

(84) Designated Contracting States:
**AT BE BG CH CY CZ DE DK EE ES FI FR GB GR HU IE IS IT LI LT LU MC NL PL PT RO SE SI SK TR**

(30) Priority: **19.01.2004 EP 04100138**

(43) Date of publication of application:
**11.10.2006 Bulletin 2006/41**

(73) Proprietor: **Koninklijke Philips Electronics N.V. 5621 BA Eindhoven (NL)**

(72) Inventors:
• **HENDRIKS, Bernardus**
**F-75008 Paris (FR)**
• **KUIJPER, Maarten**
**F-75008 Paris (FR)**

(74) Representative: **van Oudheusden-Perset, Laure E. et al**
**Société Civile SPID**
**156, Boulevard Haussmann**
**75008 Paris (FR)**

(56) References cited:
**EP-A- 0 756 273          EP-A- 1 209 669**
**WO-A-96/06427          US-A- 5 614 938**
**US-A- 5 625 609          US-A1- 2002 003 755**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to an objective lens and, particularly, although not exclusively, to an objective lens for use in reading dual layer optical disks.

Dual layer optical disks comprise a first cover layer above a first information layer, and below this a second cover layer and second information layer. The thickness of the first and second cover layers introduces a degree of spherical aberration in the reading/writing of such disks by any given objective lens. For dual layer blu-ray disks (BD) and small form factor optical (SFFO) read out, a blue laser (405 nm wavelength) and a high numerical aperture objective lens (NA=0.85) is employed and these two factors (short wavelength/ high NA) tend to make the spherical aberration problems particularly acute.

In the prior art, a preferred way to achieve spherical aberration correction relies on changing the vergence of the beam entering the objective lens. This change in vergence gives rise to an amount of spherical aberration generation by the objective lens. By a proper choice of vergence change, the lowest order spherical aberration arising at the disk due to a change in cover layer thickness can thus be compensated for (i.e. cancelled out) by the additional aberration generated at the lens.

However, a change in vergence alone does not provide adequate spherical aberration compensation in a dual layer disk arrangement because of the fact that there are two different effective cover layer thicknesses involved. With the above in mind, a compromise is sought in which the objective lens is arranged to provide a minimal amount of spherical aberration which is evenly distributed so that scanning of the first and second information layers may be carried out on equal terms.

In the most recent prior art the European application No. 756273 this was attempted by providing an objective lens designed for an optimal performance when scanning a notional (non-existant) layer situated at a depth exactly between the first and second information layers.

US 5,614,938 discloses a system in which a minimum spherical aberration is obtained in an intermediate layer of a multi-layer recording medium.

It is an aim of preferred embodiments of the invention to determine parameters for the design of an objective lens with a view to optimising aspects of objective lens design and optical scanning devices for dual layer disks.

According to a first aspect of the invention, there is provided an objective lens for use with a multi-layer optical information carrier as defined in claim 1. The objective lens is optimized to produce substantially equal amounts of higher order spherical wavefront aberration when scanning the first and second information layers by designing said objective lens to provide minimum spherical aberration at a depth $D_{opt}$ which is less than 0.995 $D_{AV}$ and preferably less than 0.99 $D_{AV}$.

Preferably, the objective lens is arranged, in use, such that when scanning the first information layer a radiation beam from a light source is convergent on entry to the objective lens, whilst when scanning the second information layer the radiation beam is divergent on entry.

The invention also includes an optical scanning device for optically scanning a multi-layer optical information carrier and employing the objective lens of the first aspect.

Preferred features of the objective lens and scanning device are set out in the dependent claims.

For a better understanding of the invention, and to show how embodiments of the same may be carried into effect, reference will now be made, by way of example, to the accompanying diagrammatic drawings in which:

Figure 1 shows an optical recording light path;
Figures 2A-C shows a dual layer disk, objective lens and optical beam in which Figure 2A shows focusing on an "averaged" depth, 2B focusing on an information layer at depth D1 and 2C focusing on an information layer at depth D2;
Figure 3 shows an objective lens of a first type to which the invention may be applied; and
Figure 4 shows an objective lens of a second type to which the invention may be applied.

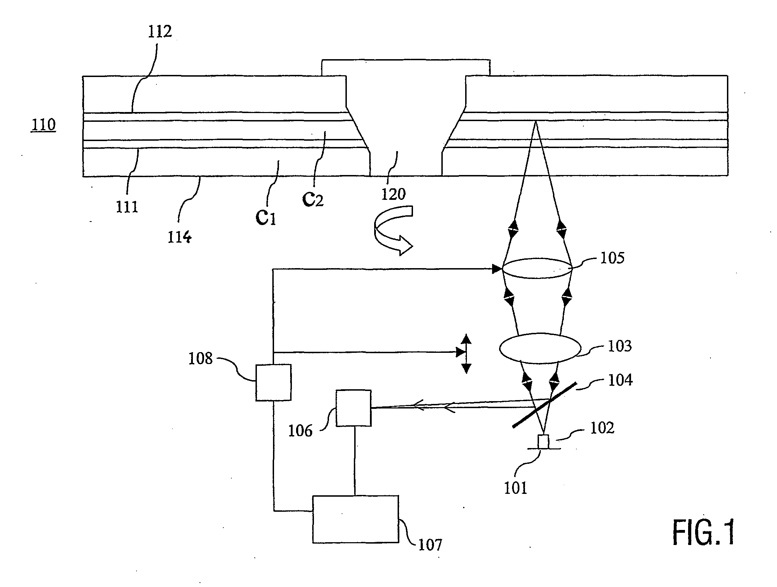

As an example of an apparatus to which embodiments of the invention may be applied, an optical scanning device is depicted in Figure 1. Such an optical scanning device comprises a radiation source 101 for producing an optical beam 102, a collimator type lens 103, a beam splitter 104, a servo controlled objective lens 105, detecting means 106, measuring means 107 and a controller 108. This optical scanning device is intended for scanning a dual layer information carrier 110. The optical scanning device further comprises a rotating turntable and spindle 120 for receiving the information carrier 110.

The information carrier 110 comprises a first information layer 111 closest to an entrance face 114 thereof and a second information layer 112 further away from the entrance face 114. The first information layer 111 is protected by a first cover layer C1, whilst the first and second information layers are separated from each other by a second cover layer C2.

The arrangement of collimator type lens 103 and objective lens 105 allows scanning in two different modes. In a first mode (shown in figure 1) the collimator type lens 103 is axially positioned so as to provide a slightly divergent beam to an entrance face of the objective lens 105 for scanning the second information layer 112. In the second mode (not shown), the axial position of the collimator type lens 103 is changed to provide a slightly convergent beam to the objective lens 105 for scanning the first information layer 111.

During any given scanning operation, which can be a writing operation, an erase operation or a reading operation, the beam 102 is transformed by the collimator type lens 103 and the objective lens 105 operating in either the first or second mode, and the information carrier 110 is scanned by the resulting beam. The radiation beam reflected back by the information carrier 110 is passed to the detecting means 106 via beam splitter 104.

From the radiation beam passed to the detecting means 106 a focus error signal and a tracking error signal are derivable,in addition to any information content read from the carrier 110.

The magnitude of the focus error signal corresponds to an error in axial positioning of the scanning beam on the information layer. This focus error signal is used to correct the axial position of the objective lens 105. Such correction is achieved by sending a signal to the controller 108, which drives an actuator (not shown) to move the objective lens 105 axially.

The tracking error signal is used to correct the lateral position of the objective lens 105 in order to keep the focused spot on the information track.

The collimator type lens 103 is an optical element placed between the radiation source 101 and the objective lens 105. As already discussed above, in the first scanning mode (illustrated in Figure 1), the collimator type lens 103 converts the radiation beam 102 into a diverging entrance beam, which reaches the objective lens 105, whilst in the second mode, it converts the radiation beam 102 into a converging entrance beam. When the collimator type lens 103 is in a position such that the radiation source 101 is at its focal point, it acts as a true collimator and converts the radiation beam 102 into a parallel entrance beam. In order to obtain a diverging entrance beam for the first mode, the collimator type lens 103 is moved towards the radiation source 102, compared to the truly collimating position. In order to obtain a converging entrance beam for the second mode, the collimator type lens 103 is moved away from the radiation source 102, compared to the true collimating position. The position of the collimator 103 is controlled by an actuator, which is controlled by the controller 108. The controller 108 is a multi-purpose controller that can control independently the actuator for moving the objective lens 105 and the actuator for moving the collimator 103. Depending on the scanning mode, the controller 108 controls the position of the collimator 103.

The objective lens 105 is designed in such a way that, when it focuses a parallel entrance beam on a certain plane located between the first and second information layers of the information carrier 110, no spherical aberration is present in the plane of the focal point of the beam. As a consequence, if the first information layer 111 were scanned with a parallel entrance beam, spherical aberration would occur. By changing the conjugate distance during scanning of the first information layer 111, i.e. employing a diverging entrance beam, the objective lens 105 may be arranged to itself give rise to an amount of spherical aberration, which substantially compensates the abovementioned spherical aberration caused by the change in cover layer thickness between the first and second information layers.

In general, an objective lens used for optical recording complies substantially with the Abbe Sine condition. Such a lens will give rise to an amount of spherical aberration $W_{conj}$ when changing the image conjugate distance which is related to the distance change and also to the numerical aperture. The amount of spherical aberration introduced at the disk $W_{disk}$ due to a change in cover layer thickness is also related to the thickness and the numerical aperture. By changing the object conjugate also the image conjugate distance changes. By a proper choice of image conjugate distance change, the additional amount of spherical aberration caused when switching from one information layer to the other can be compensated by the amount generated in the objective by the conjugate change.

According to the above, it is possible to make the spherical aberration amount caused by a change in conjugate image distance cancel out the lowest order spherical aberration caused by a change $\Delta d$ in cover layer thickness. A certain amount of higher order spherical wavefront aberration remains.

From the above it can be noted that whilst the cover layer thicknesses may be fixed on dual layer disks in accordance with pre-existing standards, such a spherical aberration optimisation may be achieved by an appropriate change in the conjugate object distance selected in accordance with given disk parameters.

Depending on the direction of the object conjugate change, the NA will increase or decrease. When the NA increases the system tolerance becomes more sensitive and higher order spherical aberration increases. Here, it is to be noted that lower order spherical aberration due to a change in cover layer thickness in one direction will become larger than for the same change in cover layer thickness in the opposite direction.

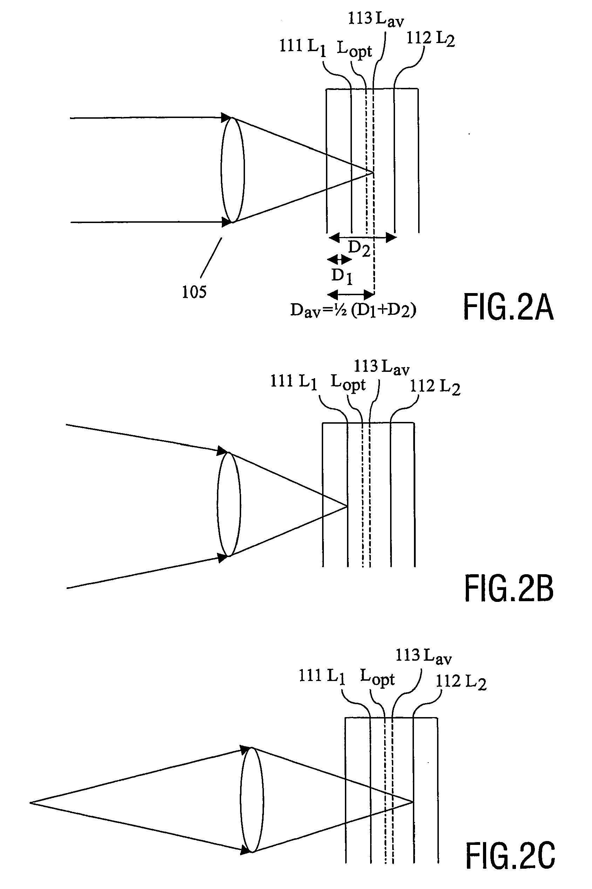

Referring now to Figures 2A-C, there is shown in more detail, the objective lens 105 and the disk 110 with first layer 111 L1 at a depth D1 below the entrance surface of the carrier 110 and second layer 112 L2 at a depth D2 below the entrance surface.

In Figure 2A, a parallel beam is shown entering the objective lens 105 which is assumed to have been optimised for minimum (preferably zero) spherical aberration for a hypothetical layer Lav 113 at a depth $D_{av}$ ( where $D_{av} = 0.5$

(D1+D2)) and parallel entrance beam. The object conjugate distance is infinite.

Considering now the lens set-up of Figure 2B, to focus on the, closest, first information layer L1 111 at depth D1, the incoming beam to the objective lens 105 must be made to be converging slightly (rather than parallel). In view of this, the numerical aperture of the beam on the image side increases.

Considering now the lens set-up of Figure 2C, to focus on the, farthest away, second information layer L2 112 at depth D2, the incoming beam to the objective lens 105 must be made to be diverging. In view of this, the numerical aperture of the beam on the image side decreases.

We define an optimal (notional) layer $L_{opt}$ for which the objective lens and disk combination should have zero aberration as being at a depth $D_{opt}$. This notional layer $L_{opt}$ could reasonably be expected by the skilled man to lie exactly between layers L1 and L2, i.e at depth $D_{av}$. The inventors however have surprisingly and counter-intuitively found it to lay closer to L1 than to L2.

With the above in mind, it will be evident that an objective lens designed to have zero spherical aberration for a disk with a cover layer depth extending to a position exactly in the middle of the two layers of a dual layer disk contrary to intuition will therefore not give rise to the optimal compromise design for reading the dual layer disk. Going from a first (upper) of the two layers to the second (lower), the NA will decrease leading to a lower value of the residual higher order aberration, whilst going from the second (lower) to the first (upper) layer the NA increases and gives rise to a higher value of the residual higher order aberrations.

In accordance with the above then, it has been discovered by the inventors that since higher order aberrations are more than linearly proportional to the NA, the optimal nominal layer depth for which the objective needs to be designed in order to provide the best compromise for reading a given dual layer disk, should deviate from a depth positioned at the centre of the two layers and should more properly lie to one side of the average depth, slightly closer to the uppermost information layer.

It has been found that the cover layer thickness $D_{opt}$ corresponding to a cover layer depth at which the objective lens should be designed to give zero spherical aberration should differ from the average thickness $D_{av}$ of the two cover layer thicknesses corresponding to the two information layers of the dual layer disk and should comply with the relation

$$\frac{\left| D_{opt} - D_{av} \right|}{D_{av}} > 0.005 \qquad (1)$$

More preferred it should comply with:

$$\frac{\left| D_{opt} - D_{av} \right|}{D_{av}} > 0.01 \qquad (2)$$

From the above inequalities, it can be seen that $D_{opt}$ differs from the average thickness $D_{av}$ of the two cover layer thickness corresponding to the positions of the two information layers of the dual layer disk. Preferably the thickness should differ from this average thickness by more than 0.5% of $D_{av}$. Even more preferred, the thickness should differ from this average thickness by more than 1.0% of $D_{av}$.

A pair of examples illustrating the above surprising results are given below.

**Examples**

Example 1

In the first embodiment an objective lens 305 for optical recording at 405nm wavelengths has a numerical aperture, NA, of 0.85. The entrance pupil diameter EP measures 1.0 mm. The free working distance (FWD) is 0.141 mm between a forward end of the lens 305 and the entrance surface of an information carrier.

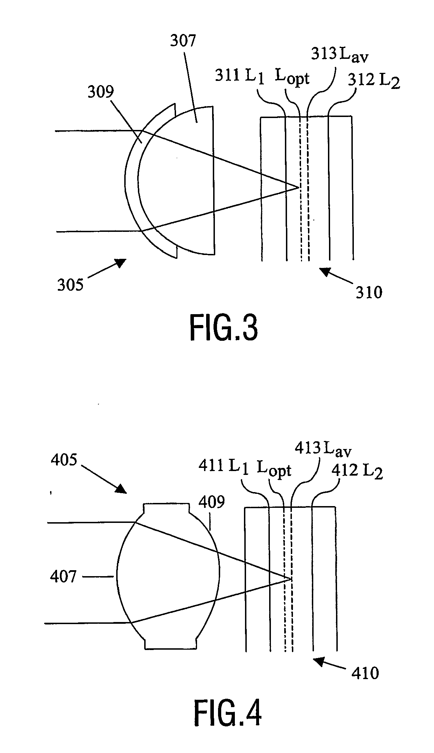

The objective lens 305 shown in Figure 3 is made of a truncated glass sphere 307, made of S-LAH66 Ohara glass, with a thin aspheric layer 309 of diacryl on the spherical side. The refractive index of the diacryl is 1.5987 and that of S-LAH66 is 1.7991. The thickness of the truncated sphere is 0.694 mm and the radius is 0.54mm. The thickness of this diacryl layer along the optical axis is 0.0165mm. The rotational symmetric aspherical shape of the surface of lens 305 facing the collimator lens (not shown) is given by the equation:

$$z(r) = \sum_{i=1}^{6} B_{2i} r^{2i}$$

with z the position of the surface in the direction of the optical axis in millimetres, r the distance to the optical axis in millimetres, and $B_k$ the coefficient of the k-th power of r. The value of the coefficients $B_2$ to $B_{12}$ are 1.094507, 0.64448149, 0.064744348, 2.3410448, -12.999302, -6.8309113, respectively. The design thickness of the optimal layer $L_{opt}$ of the disk is 0.1 mm. The disk 310 is made of Polycarbonate with refractive index 1.6223.

In table 1 the cover layer thicknesses D for a dual layer disk both larger and smaller than this optimal 100$\mu$m thickness and found to give rise to substantially the same amount of residual higher order wavefront aberration (root mean square of the optical path difference (OPD)) are listed. Also the corresponding conjugate object distance L is given (positive value means diverging beam entering the objective lens) as well as the NA change.

Table 1.

| D [micron] | L [mm] | NA | OPD [m$\lambda$] |
|---|---|---|---|
| 110.0 | 54.95 | 0.848 | 29.9 |
| 91.4 | -66.21 | 0.851 | 29.7 |

From table 1 it follows that $D_{av}$= 100.7 micron, while the optimal layer depth is 100 micron. Thus, $D_{opt}$ is 0.993 $D_{av}$.

**Example 2**

Consider the singlet plastic SFFO lens 405 of Figure 4, which is optimized for 100$\mu$m cover layer thickness.

In the second embodiment the objective lens 405 for optical recording at 405nm wavelengths has a numerical aperture, NA, of 0.85. The entrance pupil diameter EP measures 1.0 mm. The free working distance (FWD) is 0.15 mm between a forward end of the lens 405 and a recording carrier 410.

The objective lens, shown illustratively in Figure 4, is made of COC (cylco-olefine_copolymer). The refractive index of COC is 1.5499. The thickness of the lens along the optical axis is 0.915 mm. The rotational symmetric aspherical shape of the surface 407 facing the collimator lens is given by the equation:

$$z(r) = \sum_{i=1}^{8} B_{2i} \left( \frac{r}{r_0} \right)^{2i}$$

with z the position of the surface in the direction of the optical axis in millimetres, r the distance to the optical axis in millimetres, $r_0$ is the normalisation radius in millimeters, and $B_k$ the coefficient of the k-th power of r. The normalisation radius for the surface facing the collimator is $r_0$=0.5 mm. The value of the coefficients $B_2$ to $B_{16}$ are 0.25, 0.029450632, 0.015158439, -0.30922007, 1.356098, -2.5402456, 2.2389527 and-0.7750968, respectively. The surface 409 facing the disk 410 is given by the same formula but with now $r_0$=0.25 mm. The value of the coefficients $B_2$ to $B_{16}$ are -0.088581439, 0.081735809, -0.063652986, 0.022340965, 0.00054096427, -0.0033723519, 0.0011206103 and -0.00012497701, respectively. The design thickness of the optimal layer $L_{opt}$ of the disk is 0.1 mm. The disk is made of Polycarbonate with refractive index 1.6223.

The properties are listed in table 2.

Table 2.

| D [micron] | L [mm] | NA | OPD [m$\lambda$] |
|---|---|---|---|
| 115.0 | 53.39 | 0.848 | 20.4 |
| 87.7 | -63.45 | 0.853 | 20.5 |

From table 2 it follows that $D_{av}$=101.4 micron, while the optimal layer depth is 100$\mu$m. Thus, $D_{opt}$ is 0.986 $D_{av}$.

The above worked out examples indicate that for given cover layer thicknesses between information layers of a dual-layer disk, the optimum lens design may be found by selecting an objective lens which is optimised to provide minimum spherical aberration at a depth $D_{opt}$ which lies close to an average distance between an upper information layer and a lower information layer, but which deviates from this average distance to lie toward the upper layer. Usable values of Dopt for objective lens designs used with reading blu-ray type disks or similar in high NA systems will lie between this near average depth and a depth $(D1 + D_{AV})/2$.

The invention can be used in optical recording systems employing multi-layer disks, requiring spherical aberration correction, and are not restricted to dual layer disks alone. The invention has however been found to have particular utility for BD and SFFO arrangements. In particular this invention is especially relevant for systems having high-NA and small focal length such as SFFO objectives.

Although the objective lens is shown as a single element, it may also be composed of more than one element. Furthermore, the lens may comprise gratings or phase structures.

## Claims

1. An objective lens (105,305,405) for use with a multi-layer optical information carrier (110,310,410) having at least a first information layer (111) at a depth D1 below an entrance surface (114) of the carrier and a second information layer (112) at a depth D2, greater than depth D1, the first information layer (111) being the information layer located closest to said entrance surface (114), wherein the objective lens (105,305,405) is optimized to produce substantially equal amounts of higher order spherical wavefront aberration when reading the first and second information layers by designing said objective lens to provide minimum spherical aberration for scanning at a depth $D_{opt}$ which is located between an average layer depth $D_{AV} = ((D1 + D2)/2)$ and a depth $(D1 + D_{AV})/2$,
**characterized in that** the objective lens (105,305,405) is optimized to produce substantially equal amounts of higher order spherical wavefront aberration when scanning the first and second information layers by designing said objective lens to provide minimum spherical aberration for scanning at a depth $D_{opt}$ which is less than $0.995\ D_{AV}$.

2. The objective lens of claim 1, wherein the objective lens (105,305,405) is optimized to produce substantially equal amounts of higher order spherical wavefront aberration when scanning the first and second information layers by designing said objective lens to provide minimum spherical aberration for scanning at a depth $D_{opt}$ which is less than $0.99\ D_{AV}$.

3. The objective lens of any of claims 1 and 2, wherein the objective lens (105,305,405) is arranged, in use, such that when scanning the first information layer a radiation beam from a light source (101) is convergent on entry to the objective lens (105,305,405), whilst when scanning the second information layer the radiation beam is divergent on entry.

4. An optical scanning device for optically scanning a multi-layer optical information carrier (110) having at least a first information layer (111) at a depth D1 below an entrance surface of the carrier and a second information layer (112) at a depth D2, greater than depth D1, the first information layer (111) being the information layer located closest to said entrance surface (114), wherein an objective lens (105,305,405) of said device is optimized to produce substantially equal amounts of higher order spherical wavefront aberration when scanning the first and second information layers by designing said objective lens (105,305,405) to provide minimum spherical aberration for scanning at a depth $D_{opt}$ which is located between an average layer depth $D_{AV} = ((D1 +D2)/2)$ and a depth $(D1 + D_{AV})/2$,
**characterized in that** the objective lens (105,305,405) is optimized to produce substantially equal amounts of higher order spherical wavefront aberration when scanning the first and second information layers by designing said objective lens to provide minimum spherical aberration for scanning at a depth $D_{opt}$ which is less than $0.995\ D_{AV}$.

5. The device of claim 4, wherein the objective lens (105,305,405) is optimized to produce substantially equal amounts of higher order spherical aberration when scanning the first and second information layers by designing said objective lens to provide minimum spherical aberration for scanning at a depth $D_{opt}$ which is less than $0.99\ D_{AV}$.

6. The device of any of claims 4 and 5, wherein the device further comprises a light source (101), a collimator type lens (103), a beam splitter (104), and a controller (108), wherein the light source (101) is arranged to emit a light beamthrough the collimator type lens (103) and focused by the objective lens (105) to selectively be incident upon the first or second information layer according to a position of the collimator type lens(103) relative to the objective lens (105) as controlled by the controller (108), wherein reflected light from the information carrier (110) is received by the beam splitter (104) and transmitted to the photodetector (106).

7. The device of claim 6, wherein when scanning the first information layer (111), the collimator type lens(103) is arranged to convert the radiation beam (102) into a beam which is converging on entry to the objective lens (105), whilst when scanning the second information layer (112), the collimator type lens is arranged to convert the radiation beam into a beam which is diverging on entry to the objective lens (105).

8. The objective lens of any of claims 1 to 3 or the optical scanning device of any of claims 4 to 7, wherein the multi-layer information carrier is a Blu-ray type disk.

**Patentansprüche**

1. Objektivlinse (105,305,405) zur Verwendung mit einem optischen Mehrschicht-Informationsträger (110,310,410), der bei einer Tiefe D1 unter einer Eintrittsfläche (114) des Trägers zumindest eine erste Informationsschicht (111) und bei einer Tiefe D2, die größer ist als die Tiefe D1, eine zweite Informationsschicht (112) aufweist, wobei die erste Informationsschicht (111) die am dichtesten bei der genannten Eintrittsfläche (114) liegende Informationsschicht ist, wobei die Objektivlinse (105,305,405) optimiert ist, um beim Auslesen der ersten und zweiten Informationsschicht im Wesentlichen gleiche Mengen von sphärischer Wellenfrontaberration höherer Ordnung zu erzeugen, indem die genannte Objektivlinse so entworfen wird, dass sie für ein Abtasten bei einer Tiefe $D_{opt}$, die zwischen einer mittleren Schichttiefe $D_{AV} = ((D1 + D2)/2)$ und einer Tiefe $(D1 + D_{AV})/2$ liegt, minimale sphärische Aberration verschafft,
**dadurch gekennzeichnet, dass** die Objektivlinse (105,305,405) optimiert ist, um beim Abtasten der ersten und zweiten Informationsschicht im Wesentlichen gleiche Mengen von sphärischer Wellenfrontaberration höherer Ordnung zu erzeugen, indem die genannte Objektivlinse so entworfen wird, dass sie für ein Abtasten bei einer Tiefe $D_{opt}$, die kleiner ist als 0,995 $D_{AV}$, minimale sphärische Aberration verschafft.

2. Objektivlinse nach Anspruch 1, wobei die Objektivlinse (105,305,405) optimiert ist, um beim Abtasten der ersten und zweiten Informationsschicht im Wesentlichen gleiche Mengen von sphärischer Wellenfrontaberration höherer Ordnung zu erzeugen, indem die genannte Objektivlinse so entworfen wird, dass sie für ein Abtasten bei einer Tiefe $D_{opt}$, die kleiner ist als 0,99 $D_{AV}$, minimale sphärische Aberration verschafft.

3. Objektivlinse nach einem der Ansprüche 1 und 2, wobei die Objektivlinse (105,305,405) beim Gebrauch so angeordnet ist, dass beim Abtasten der ersten Informationsschicht ein aus einer Lichtquelle (101) kommendes Strahlungsbündel am Eingang zur Objektivlinse (105,305,405) konvergent ist, während beim Abtasten der zweiten Informationsschicht das Strahlungsbündel am Eingang divergent ist.

4. Optische Abtasteinrichtung zum optischen Abtasten eines optischen Mehrschicht-Informationsträgers (110), der bei einer Tiefe D1 unter einer Eintrittsfläche des Trägers zumindest eine erste Informationsschicht (111) und bei einer Tiefe D2, die größer ist als die Tiefe D1, eine zweite Informationsschicht (112) aufweist, wobei die erste Informationsschicht (111) die am dichtesten bei der genannten Eintrittsfläche (114) liegende Informationsschicht ist, wobei eine Objektivlinse (105,305,405) der genannten Einrichtung optimiert ist, um beim Abtasten der ersten und zweiten Informationsschicht im Wesentlichen gleiche Mengen von sphärischer Wellenfrontaberration höherer Ordnung zu erzeugen, indem die genannte Objektivlinse (105,305,405) so entworfen wird, dass sie für ein Abtasten bei einer Tiefe $D_{opt}$, die zwischen einer mittleren Schichttiefe $D_{AV}= ((D1 + D2)/2)$ und einer Tiefe $(D1 + D_{AV})/2$ liegt, minimale sphärische Aberration verschafft,
**dadurch gekennzeichnet, dass** die Objektivlinse (105,305,405) optimiert ist, um beim Abtasten der ersten und zweiten Informationsschicht im Wesentlichen gleiche Mengen von sphärischer Wellenfrontaberration höherer Ordnung zu erzeugen, indem die genannte Objektivlinse so entworfen wird, dass sie für ein Abtasten bei einer Tiefe $D_{opt}$, die kleiner ist als 0,995 $D_{AV}$, minimale sphärische Aberration verschafft.

5. Einrichtung nach Anspruch 4, wobei die Objektivlinse (105,305,405) optimiert ist, um beim Abtasten der ersten und zweiten Informationsschicht im Wesentlichen gleiche Mengen von sphärischer Wellenfrontaberration höherer Ordnung zu erzeugen, indem die genannte Objektivlinse so entworfen wird, dass sie für ein Abtasten bei einer Tiefe $D_{opt}$, die kleiner ist als 0,99 $D_{AV}$, minimale sphärische Aberration verschafft.

6. Einrichtung nach einem der Ansprüche 4 und 5, wobei die Einrichtung weiterhin eine Lichtquelle (101), eine Linse (103) vom Kollimatortyp, einen Strahlteiler (104) und eine Steuereinheit (108) umfasst, wobei die Lichtquelle (101) angeordnet ist, ein Lichtbündel durch die Linse (103) vom Kollimatortyp auszusenden, das von der Objektivlinse (105) fokussiert wird, sodass es selektiv auf die erste oder zweite Informationsschicht einfällt, entsprechend einer von der Steuereinheit (108) gesteuerten Position der Linse (103) vom Kollimatortyp relativ zur Objektivlinse (105), wobei vom Informationsträger (110) kommendes reflektiertes Licht vom Strahlteiler (104) empfangen und zum Photodetektor (106) durchgelassen wird.

**7.** Einrichtung nach Anspruch 6, wobei beim Abtasten der ersten Informationsschicht (111) die Linse (103) vom Kollimatortyp angeordnet ist, das Strahlungsbündel (102) in ein Strahlungsbündel umzuwandeln, das am Eingang zur Objektivlinse (105) konvergiert, während beim Abtasten der zweiten Informationsschicht (112) die Linse vom Kollimatortyp angeordnet ist, das Strahlungsbündel in ein Strahlungsbündel umzuwandeln, das am Eingang zur Objektivlinse (105) divergiert.

**8.** Objektivlinse nach einem der Ansprüche 1 bis 3 oder optische Abtasteinrichtung nach einem der Ansprüche 4 bis 7, wobei der Mehrschicht-Informationsträger eine Platte vom Blu-ray-Typ ist.

**Revendications**

**1.** Lentille d'objectif (105, 305, 405) pour être utilisée avec un support optique multicouche d'information (110, 310, 410) ayant au moins une première couche d'information (111) à une profondeur D1 au-dessous d'une surface d'entrée (114) du support et une deuxième couche d'information (112) à une profondeur D2 qui est supérieure à la profondeur D1, la première couche d'information (111) étant la couche d'information qui se situe le plus proche de ladite surface d'entrée (114) dans laquelle la lentille d'objectif (105, 305, 405) est optimisée de manière à produire des quantités sensiblement égales d'aberration sphérique de front d'onde d'ordre supérieur lorsqu'on lit les première et deuxième couches d'information en concevant ladite lentille d'objectif de manière à fournir une aberration sphérique minimale pour balayer à une profondeur $D_{opt}$ qui se situe entre une profondeur moyenne de couche $D_{AV}$ = ((D1 + D2)/2) et une profondeur (D1 + $D_{AV}$)/2, **caractérisée en ce que** la lentille d'objectif (105, 305, 405) est optimisée de manière à produire des quantités sensiblement égales d'aberration sphérique de front d'onde d'ordre supérieur lorsqu'on balaie les première et deuxième couches d'information en concevant ladite lentille d'objectif de manière à fournir une aberration sphérique minimale pour balayer à une profondeur $D_{opt}$ qui est inférieure à 0,995 $D_{AV}$.

**2.** Lentille d'objectif selon la revendication 1, dans laquelle la lentille d'objectif (105, 305, 405) est optimisée de manière à produire des quantités sensiblement égales d'aberration sphérique de front d'onde d'ordre supérieur lorsqu'on balaie les première et deuxième couches d'information en concevant ladite lentille d'objectif de manière à fournir une aberration sphérique minimale pour balayer à une profondeur $D_{opt}$ qui est inférieure à 0,99 $D_{AV}$.

**3.** Lentille d'objectif selon l'une quelconque des revendications précédentes 1 et 2, dans laquelle la lentille d'objectif (105, 305, 405) est agencée, en service, de telle façon que, lors du balayage de la première couche d'information, un faisceau de rayonnement en provenance d'une source lumineuse (101) soit convergent à l'endroit de l'entrée à la lentille d'objectif (105, 305, 405) alors que, lors du balayage de la deuxième couche d'information, le faisceau de rayonnement est divergent à l'endroit de l'entrée.

**4.** Dispositif de balayage optique pour balayer optiquement un support optique multicouche d'information (110) ayant au moins une première couche d'information (111) à une profondeur D1 au-dessous d'une surface d'entrée du support et une deuxième couche d'information (112) à une profondeur D2 qui est supérieure à la profondeur D1, la première couche d'information (111) étant la couche d'information qui se situe le plus proche de ladite surface d'entrée (114) dans laquelle une lentille d'objectif (105, 305, 405) dudit dispositif est optimisée de manière à produire des quantités sensiblement égales d'aberration sphérique de front d'onde d'ordre supérieur lorsqu'on balaie les première et deuxième couches d'information en concevant ladite lentille d'objectif (105, 305, 405) de manière à fournir une aberration sphérique minimale pour balayer à une profondeur $D_{opt}$ qui se situe entre une profondeur moyenne de couche $D_{AV}$ = ((D1 + D2)/2) et une profondeur (D1 + $D_{AV}$)/2,
**caractérisé en ce que** la lentille d'objectif (105, 305, 405) est optimisée de manière à produire des quantités sensiblement égales d'aberration sphérique de front d'onde d'ordre supérieur lorsqu'on balaie les première et deuxième couches d'information en concevant ladite lentille d'objectif de manière à fournir une aberration sphérique minimale pour balayer à une profondeur $D_{opt}$ qui est inférieure à 0,995 $D_{AV}$.

**5.** Dispositif selon la revendication 4, dans lequel la lentille d'objectif (105, 305, 405) est optimisée de manière à fournir des quantités sensiblement égales d'aberration sphérique d'ordre supérieur lorsqu'on balaie les première et deuxième couches d'information en concevant ladite lentille d'objectif de manière à fournir une aberration sphérique minimale pour balayer à une profondeur $D_{opt}$ qui est inférieure à 0,99 $D_{AV}$.

6. Dispositif selon l'une quelconque des revendications précédentes 4 et 5, dans lequel le dispositif comprend encore une source lumineuse (101), une lentille de type de collimateur (103), un diviseur de faisceau (104) et un contrôleur (108), dans lequel la source lumineuse (101) est agencée de manière à émettre un faisceau lumineux à travers la lentille de type de collimateur (103) et est focalisée par la lentille d'objectif (105) pour tomber sélectivement sur la première ou la deuxième couche d'information selon une position de la lentille de type de collimateur (103) par rapport à la lentille d'objectif (105) comme contrôlé par le contrôleur (108) où la lumière réfléchie en provenance du support d'information (110) est reçue par le diviseur de faisceau (104) et est transmise au détecteur photoélectrique (106).

7. Dispositif selon la revendication 6, dans lequel, lors du balayage de la première couche d'information (111), la lentille de type de collimateur (103) est agencée de manière à convertir le faisceau de rayonnement (102) en un faisceau qui est convergent à l'endroit de l'entrée à la lentille d'objectif (105) alors que, lors du balayage de la deuxième couche d'information (112), la lentille de type de collimateur est agencée de manière à convertir le faisceau de rayonnement en un faisceau qui est divergent à l'endroit de l'entrée à la lentille d'objectif (105).

8. Lentille d'objectif selon l'une quelconque des revendications précédentes 1 à 3 ou dispositif de balayage optique selon l'une quelconque des revendications précédentes 4 à 7, dans laquelle le support multicouche d'information est un disque de type de bleu-rayon.

FIG.1

FIG.2A

FIG.2B

FIG.2C

FIG.3

FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 756273 A

- US 5614938 A